# EUROPÄISCHE PATENTANMELDUNG

(11) **EP 0 676 577 A2**
(43) Veröffentlichungstag der Anmeldung: **11.10.1995**
(21) Anmeldenummer: 95104293.6
(22) Anmeldetag: 23.03.1995
(51) Int. Cl.: F16L 37/38

(54) **Leitungskupplungsvorrichtung**

(30) Priorität: 08.04.1994 DE 4412114
(71) Anmelder: DEERE & COMPANY, Moline, Illinois 61265 (US)
(72) Erfinder: Barzen, Rainer, D-54516 Flussbach (DE); Mies, Dieter, D-53881 Euskirchen (DE); Dannigkeit, Helmut, D-66484 Battweiler (DE)
(74) Vertreter: Feldmann, Bernhard

(57) **Zusammenfassung**

2.1. Herkömmlich werden Leitungskupplungsvorrichtungen von manuell bedienbaren Schnellkupplungen gebildet, die mittels Rastkugeln und von Hand bewegten Schiebehülsen geschlossen oder geöffnet werden. Andere Leitungskupplungsvorrichtungen für automatische Kupplungsvorgänge weisen teuere und aufwendige Stecker und Muffen auf, die der Gefahr unterliegen, Lecköl zu verlieren.

2.2. Eine erfindungsgemäße Leitungskupplungsvorrichtung enthält eine bekannte, als Schnellkupplung ausgebildete Kupplung (16) in Flachventilbauart mit einer Schiebehülse (88), die in einem Träger (12) festgelegt ist.

2.3. Derartige Leitungskupplungsvorrichtungen sind beim automatischen Anschließen von Erntebergungsvorrichtungen an Erntemaschinen verwendbar.

## Beschreibung

Die Erfindung betrifft eine Leitungskupplungsvorrichtung mit einem ersten und einem zweiten Träger, die jeweils einen Stecker und eine Muffe für Druckmittel tragen, von denen wenigstens einer gemeinsam mit oder getrennt von dem Träger auf die jeweils andere linear beweglich ist.

Leitungskupplungsvorrichtungen sind in vielfältigster Ausführung bekannt und häufig als Schnellkupplungssysteme ausgebildet, die eine schnelle Trennung einer Kupplung, also das Entfernen eines Steckers aus einer Muffe oder Steckdose, vorsehen. Über derartige Kupplungen wird Öl, Wasser, Schmiermittel, Druckluft und dergleichen übertragen.

Nach einer Art einer herkömmlichen Bauweise wird der Stecker in der Muffe mittels Rastkugeln festgehalten, die steckerseitig in eine Ringnut eingreifen und muffenseitig von einer federbelasteten Schiebehülse gehalten werden. Zur Verbindung bzw. Trennung der Kupplung wird die Schiebehülse derart verschoben, daß die Rastkugeln in bzw. aus der Ringnut treten können. Eine derartige Schnellkupplung ist bei der Serie FF der Firma Parker Fluid Verbindungsteile GmbH gegeben.

Der Trenn- bzw. Kupplungsvorgang wird dadurch vollzogen, daß die Schiebehülse von Hand bewegt und nach Einführen des Stekkers wieder losgelassen wird, so daß sie aufgrund der Federkraft ihre arretierende Stellung einnimmt.

Aus der DE-A-26 40 840, der DE-A-21 11 227, der SE-409 806 und der EP-A-0 434 472 ist es bekannt, zum Anschluß eines Werkzeugs an einen Frontlader, eines Schneidwerks an einen Mähdrescher oder eines Anhängers an ein Zugfahrzeug auf Konsolen oder Platten aufmontierte Schnellkupplungen zu verwenden, die während des Kupplungsvorgangs miteinander verbunden und mittels äußerer Krafteinwirkung zusammen gehalten werden.

Nach diesem Stand der Technik verwendete Kupplungen sind entweder mit Leckagen behaftet oder sehr teuer und aufwendig in der Herstellung.

Patentanspruch 1 lehrt eine erfindungsgemäße Leitungskupplungsvorrichtung, wobei in den weiteren Patentansprüchen Merkmale aufgeführt sind, die diese Lösung in vorteilhafter Weise weiterentwickeln.

Auf diese Weise kann anstelle der bekannten teueren Kupplungsteile eine herkömmlich handbetätigte Kupplung verwendet werden, die im Handel günstig zu erwerben und weitestgehend leckfrei ist.

Mittels einer separaten verschiebbaren Hülse oder Verschlußkappe kann der Eintritt der Rastkugeln so gesteuert werden, daß er genau dann erfolgt, wenn diese in Deckung mit einer Ausnehmung, z. B. einer Ringnut, in dem Stecker geraten und somit nicht mechanisch wegbewegt oder weggehalten werden müssen.

Die Bewegung der Rastkugeln kann mittels eines Ringraums und einer Schulter in der Schiebehülse erfolgen, die deren Weg begrenzen oder freigeben.

Die Ausbildung des Steckers und der Muffe als Flachventil verhindert bestmöglich das Eindringen von Schmutz und sorgt für leicht erreichbare Sauberkeit.

Die Verwendung einer Schnellverschlußkupplung Serie FF der Firma Parker Fluid Verbindungsteile GmbH ist besonders günstig, weil diese im Handel verfügbar ist und ohne Änderungen, sondern lediglich durch die erfinderische Anbringung den betreffenden Erfolg herbeiführt.

Die Verbindung des Steckers mit der Muffe kann zwar manuell erfolgen, indem man den Stecker in die erfindungsgemäß festgelegte Muffe einführt; besonders vorteilhaft ist es aber, wenn dies mittels eines Schlittens oder dergleichen lineare Führung, z. B. mittels Lenkern, durchgeführt wird, dessen Bewegungsbahn vorgegeben ist, so daß Verkanten und Ungenauigkeiten beim Kuppeln nicht auftreten.

Diese Schlittenführung erlaubt es zudem, Stecker und Muffe fremdkraftbetätigt mittels eines Motors zu verbinden, der insbesondere elektrisch oder hydraulisch fernsteuerbar ist, so daß eine Bedienungsperson an der Kuppelstelle nicht erforderlich ist.

Die Möglichkeit, den Druckmittelfluß zu dem Stecker und/oder der Muffe mittels eines von dem Kuppelzustand, nämlich der Stellung eines der beiden abhängig zu machen, kann hohe Leitungsdrücke, insbesondere bei Wärmeeinwirkung, verhindern oder einen ganzen Kupplungszusammenbau arretieren.

Die Anwendung der erfindungsgemäßen Leitungskupplungsvorrichtung wird universeller, wenn sie begleitend auch die Verbindung elektrischer Kontakte zuläßt.

Wenn die Leitungskupplungsvorrichtung für den Anschluß einer Erntebergungsvorrichtung an eine Erntemaschine, insbesondere eines Schneidwerks an einen Mähdrescher, verwendet wird, ergibt sich eine hohe Zeiteinsparung, weil eine Bedienungsperson den Kupplungsvorgang von einer Fahrerkabine aus erledigen kann, und eine hohe Kosteneinsparung, wenn dadurch auf die Verwendung einer faltbaren Erntebergungsvorrichtung verzichtet werden kann.

In der Zeichnung ist ein nachfolgend näher beschriebenes Ausführungsbeispiel der Erfindung dargestellt. Es zeigt:
- Fig. 1: eine erfindungsgemäße Leitungskupplungsvorrichtung in Seitenansicht mit einer Kupplung,
- Fig. 2: die Leitungskupplungsvorrichtung aus Figur 1 in Draufsicht,
- Fig. 3: die Kupplung der Leitungskupplungsvorrichtung in getrenntem Zustand in Seitenansicht und im halben Vertikalschnitt und
- Fig. 4: die Kupplung aus Figur 3 im verbundenen Zustand.

Eine Leitungskupplungsvorrichtung 10 enthält einen ersten und einen zweiten Träger 12 und 14 mit einer Kupplung 16, die einen Stecker 18 auf dem ersten Träger 12 und eine Muffe 20, oder Steckdose, auf dem zweiten Träger 14 aufweist.

Die Leitungskupplungsvorrichtung 10 dient der Verbindung eines nicht gezeigten Eingangs 22 von einer Druckquelle oder zu einem Vorratsbehälter mit einem Verbraucher 24 und umgekehrt.

Der erste Träger 12 befindet sich in diesem Ausführungsbeispiel auf einem Schrägförderer 26 eines Mähdreschers, der beispielhaft für jede andere Art einer Erntemaschine oder andere Maschine steht, und enthält einen Rahmen 28, in dem ein die Muffe 20 aufnehmender Schlitten 30 linear beweglich gelagert ist. Während der Rahmen 28 starr an dem Schrägförderer 26 aufsitzt, ist der Schlitten 30 in dem ersten Träger 12 und gegenüber dem zweiten Träger 14 relativ beweglich.

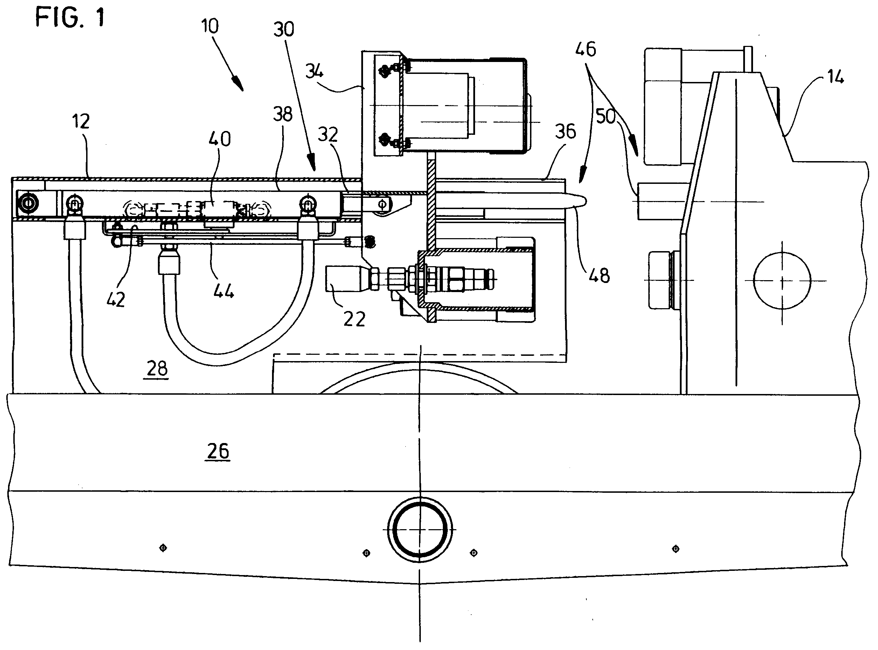

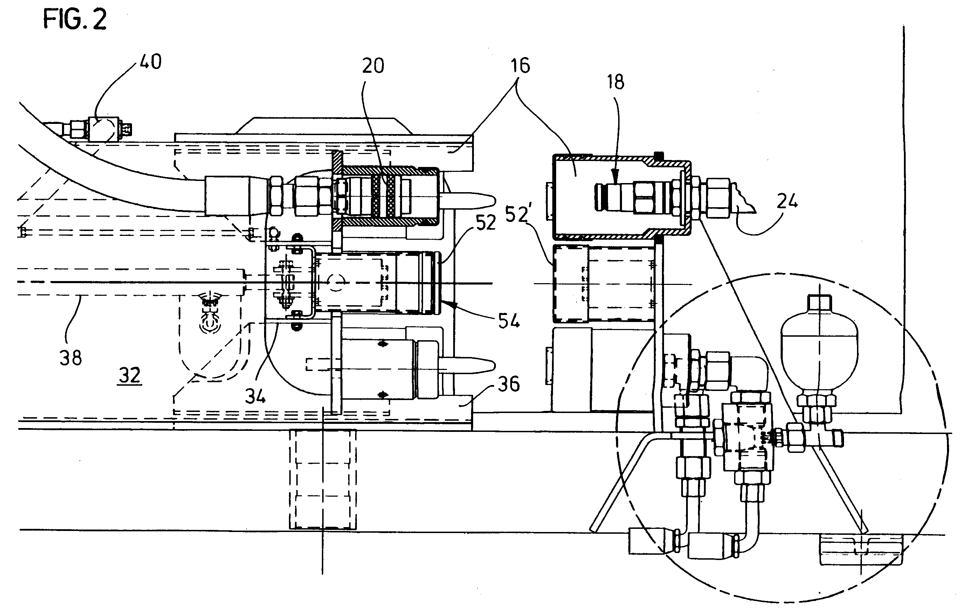

Der Schlitten 30 setzt sich im wesentlichen aus einer Platte 32 und einem zu dieser senkrecht verlaufenden Aufbau 34 zusammen, an dem wenigstens ein Teil der Kupplung 16 angebracht ist. In Figur 1 ist ein Stecker 18, in Figur 2 hingegen eine Muffe 20 in dem Aufbau 34 gezeigt. Die Platte 32 ist endseitig zu einem Hutprofil umgebogen und über dieses in zwei U-Schienen 36 des Rahmens 28 linear horizontal beweglich gelagert. Zwischen der Platte 32 und dem Rahmen 28 ist ein beidenends an diesen befestigter Motor 38 gespannt, der in diesem Ausführungsbeispiel von einem Hydraulikzylinder gebildet wird. Gleichsam könnte es sich auch um einen Elektromotor, einen Pneumatikzylinder oder in der einfachsten Form um einen Hebel bzw. einen Bowdenzug handeln; jedenfalls ist der Motor 38 in beiden Richtungen aktivierbar.

Die Zuleitung von Druckmittel zu dem Stecker 18 bzw. der Muffe 20 erfolgt auf der Seite des ersten Trägers 12 über ein Ventil 40, das in eine den Druckmittelfluß sperrende und in eine diesen freigebende Stellung bringbar ist. Wenn dieses Ventil 40 seine Sperrstellung einnimmt, kann sich ein Druckaufbau in der Leitung zu dem Stecker 18 oder der Muffe 20 z. B. aufgrund einer Sonneneinstrahlung nicht auf diese auswirken, und die Kupplung 16 kann problemlos geschlossen bzw. geöffnet werden. Zudem wird während des Kuppelvorgangs der Austritt von unter Druck stehender Leckflüssigkeit vermieden. Zum Öffnen oder Schließen des Ventils 40 weist dieses einen nicht im einzelnen gezeigten Drehschieber auf, der über einen Hebel 42 und eine Stange 44 mit dem Aufbau 34 gelenkig verbunden ist. Aufgrund dieser Verbindung zwischen dem Schlitten 30 und dem Ventil 40 wird letzteres in Abhängigkeit von der Stellung des Schlittens 30 geschlossen, um entweder Druckmittel durch die Kupplung 16 zu leiten oder einen anderen Motor zu beaufschlagen.

An dem Aufbau 34 befinden sich zudem zwei zu Zentriermitteln 46 gehörende Zentrierstifte 48, die in paßgenaue Zentrierbüchsen 50 auf dem zweiten Träger 14 eingeführt werden können.

Außerdem befindet sich auf dem Aufbau 34 ein Teil 52 einer Elektrokupplung 54, während sich der dazugehörige zweite Teil 52' auf dem zweiten Träger 14 befindet.

Der Vollständigkeit halber wird darauf hingewiesen, daß die Anordnung, die Anzahl und die Zusammenstellung der Kupplungen 16, Elektrokupplungen 54 und Zentriermittel 46 beliebig ist und der jeweiligen Verwendung angepaßt werden kann.

Die bisherige Beschreibung und die Figuren 1 und 2 machen deutlich, daß sich die jeweiligen einen Teile der Kupplungen 16, Elektrokupplungen 54 und Zentriermittel 46 mit dem Schlitten 30 gemeinsam bewegen.

Der zweite Träger 14 enthält den Stecker 18 und ist in diesem Fall starr auf einer nicht gezeigten Erntebergungsvorrichtung befestigt, die ein Schneidwerk, ein Maisgebiß, ein Maispflücker, eine Pick-Up und dergleichen sein kann und an den Schrägförderer der Erntemaschine angebaut werden kann. Das Aussehen des zweiten Trägers 14 ist größtenteils unabhängig von der Erfindung und muß lediglich eine stets gleiche Ausrichtung des Steckers 18 zu der Muffe 20 während des Kupplungsvorgangs gewährleisten.

Die beiden Träger 12, 14 können anstatt an einer Erntemaschine auch an jeder anderen Maschine verwendet werden, an die eine Vorrichtung angebracht und wieder entfernt wird, also insbesondere an Kommunalfahrzeugen, Frontladern, Baumaschinen, Ackerschleppern, Forstmaschinen u.s.w..

Auf dem zweiten Träger 14 sind die jeweils zweiten Teile der Kupplungen 16, Elektrokupplungen 54 und Zentriermittel 46 befestigt, die durch die Schiebebewegung des Schlittens 30 mit den ersten Teilen in Eingriff gebracht werden.

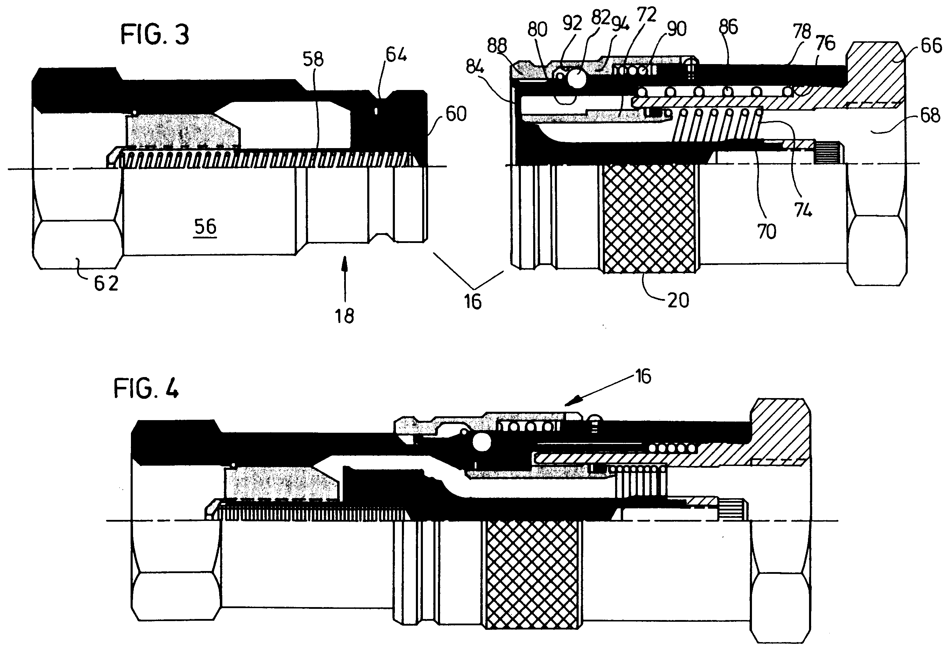

Im weiteren wird Bezug genommen auf das in den Figuren 3 und 4 Gezeigte, nämlich eine als Schnellverschlußkupplung ausgebildete Kupplung 16 Serie FF der Firma Parker Fluid Verbindungsteile GmbH, die in dieser Leitungskupplungsvorrichtung 10 Anwendung findet. Die spezielle Schnellverschlußkupplung steht nur beispielhaft für andere baugleiche Schnellverschlußkupplungen.

Figur 3 zeigt auf der linken Seite den Stecker 18 und auf der rechten Seite die Muffe 20 der Kupplung 16.

Der Stecker 18 setzt sich aus einer innenhohlen Hülse 56 und einem in dieser gegen die Kraft einer Feder 58 nach innen verschiebbaren Stopfen 60 zusammen. Einenends ist an die Hülse 56 ein Sechskant 62 und anderenends eine als Ringnut ausgebildete Ausnehmung 64 angeformt.

Die Muffe 20 oder Steckdose setzt sich aus einer Hülse 66 und einem zentrisch in dieser gehaltenen, jedoch einen Ringraum 68 zu ihr belassenden Stempel 70 zusammen. Zwischen dem Stempel 70 und der Innenwand der Hülse 66 ist gleitend und dichtend eine Büchse 72 gelagert, die unter der Kraft einer Feder 74 an einem vorderen, d. h. in der Zeichnung linken Bereich des Stempels 70 zur Anlage kommt und von dem rechten Endabschnitt der Hülse 56 des Steckers 18 in eine einen Spalt zwischen dem Stempel 70 und der Hülse 66 freigebende Stellung bringbar ist.

Die Außenseite der Hülse 66 enthält eine Schulter 76, auf die ein Zylinder 78 unbeweglich aufgesetzt ist. Der Zylinder 78 ist in dem dem Stecker 18 zugelegenen Endbereich mit Durchtrittsöffnungen 80 für Rastkugeln 82 versehen.

Zwischen die Hülse 66 und den Zylinder 78 ist eine Verschlußkappe 84 eingefügt, die ebenfalls gegen die Wirkung einer Feder 86 in eine dem Stecker 18 abgelegene Stellung bringbar ist, in der sie bis hinter die Durchtrittsöffnungen 80 gleitet und diese somit freigibt.

Auf der Außenfläche des Zylinders 78 ist eine Schiebehülse 88 gegen die Kraft einer Feder 90 gleitend geführt. An der Innenumfangsfläche der Schiebehülse 88 befindet sich ein Ringraum 92 und eine Schulter 94. Während der Ringraum 92 der Aufnahme der Rastkugeln 82 dient, legt die Schulter 76 diese in den Durchtrittsöffnungen 80 in einer radial inneren Lage radial fest.

Der genaue Aufbau des Steckers 18 und der Muffe 20, sowie die Funktion ihrer Einzelteile während des herkömmlichen Kupplungsvorgangs sind bekannt und werden daher nicht erläutert.

Allerdings unterscheidet sich diese insoweit beschriebene Kupplung 16 von dem Stand der Technik dadurch, daß die Muffe 20 mittels ihrer Schiebehülse 88 an dem Aufbau 34 festgelegt wird, z. B. festgeschraubt, festgeklemmt oder dergleichen, während die Hülse 66 mit ihren Innereien gegenüber dem Aufbau beweglich ist.

Die Verbindung zwischen dem Stecker 18 und der Muffe 20, d. h. das Schließen der Kupplung 16 vollzieht sich wie folgt.

Die Erntebergungsvorrichtung wird an die Erntemaschine bzw. deren Schrägförderer befestigt, so daß sich die beiden Träger 12, 14 fluchtend gegenüberstehen. Anschließend wird der Motor 38 ausgefahren, so daß sich Stecker 18 und Muffen 20 aufeinander zu bewegen. Sobald sich Stecker 18 und Muffe 20 berühren, kommt der Stopfen 60 an dem Stempel 70 und die Hülse 56 des Steckers 18 an der Büchse 72 und der Verschlußkappe 84 zur Anlage. Ein weiteres Ausfahren des Motors 38 bewirkt, daß die Büchse 72, die Verschlußkappe 84 und der Stopfen 60 jeweils nach innen geschoben werden und somit einen Kanal zum Durchtritt des Druckmittels bilden. Wenn die Verschlußkappe 84 vollkommen nach innen bewegt worden ist, können die Rastkugeln 82 die Durchtrittsöffnungen 80 passieren und in die Ausnehmungen 64 auf dem Außenumfang der Hülse 56 des Steckers 18 eintreten. Schließlich bewegt sich der Stecker 18 und die Muffe 20 mit Blick auf Figur 3 bzw. 4 so weit nach rechts, bis die Rastkugeln 82 von der Schulter 94 radial festgehalten werden und die Kupplung 16 gesichert ist.

Zu diesem Zeitpunkt ist das Ventil 40 so weit betätigt, daß es geöffnet ist und Druckmittel fließen lassen kann oder je nach seiner Stellung in dem Hydraulikkreis einen weiteren Hydraulikmotor, der z. B. zwei Kupplungshälften einer automatischen Schneidwerkskupplung aneinander zur Anlage bringt, in der gekuppelten Stellung arretiert.

Der Trennvorgang der Kupplung 16 erfolgt in umgekehrter Reihenfolge.

## Patentansprüche

1. Leitungskupplungsvorrichtung (10) mit einem ersten und einem zweiten Träger (12 und 14), die jeweils einen Stecker (18) und eine Muffe (20) für Druckmittel tragen, von denen wenigstens einer gemeinsam mit oder getrennt von dem Träger (18, 20) zu der jeweils anderen linear beweglich ist, dadurch gekennzeichnet, daß der Stecker (18) und die Muffe (20) über umfangsmäßig eingreifende Rastkugeln (82) sicherbar sind, wobei die Rastkugeln (82) mittels einer auf der Muffe (20) beweglich gelagerten Schiebehülse (88) in einer arretierenden Stellung gehalten werden oder in eine nicht-arretierende Stellung gelangen können und die Schiebehülse (88) an dem Träger (12, 14) festgelegt ist.

2. Leitungskupplungsvorrichtung nach Anspruch 1, dadurch gekennzeichnet, daß die Muffe (20) eine gegen eine Federkraft axial verschiebbare Hülse (Verschlußkappe 84) enthält, die mittels des Steckers (18) in eine die Rastkugeln (82) radial bewegliche Stellung bringbar ist.

3. Leitungskupplungsvorrichtung nach Anspruch 1 oder 2, dadurch gekennzeichnet, daß die Schiebehülse (88) einen Ringraum (92) zur Aufnahme der Rastkugeln (82) in einer äußeren radialen Lage und eine Schulter (94) zum Bewegen und Halten in einer inneren radialen Lage aufweist, wobei nach Einführen des Steckers (18) in die Muffe (20) die Schiebehülse (88) eine Stellung einnimmt, in der die Rastkugeln (82) von der Schulter (92) in der radial inneren Lage und in Eingriff mit einer Ausnehmung (64) in dem Stecker (18) gehalten werden.

4. Leitungskupplungsvorrichtung nach einem oder mehreren der vorherigen Ansprüche, dadurch gekennzeichnet, daß die Muffe (20) und der Stecker (18) als Flachventil ausgebildet sind.

5. Leitungskupplungsvorrichtung nach einem oder mehreren der vorherigen Ansprüche, dadurch gekennzeichnet, daß die Muffe (20) und der Stecker (18) Teile einer Schnellverschlußkupplung Serie FF der Firma Parker Fluid Verbindungsteile GmbH sind.

6. Leitungskupplungsvorrichtung nach einem oder mehreren der vorherigen Ansprüche, dadurch gekennzeichnet, daß die Muffe (20) und/oder der Stecker (18) auf einem linear beweglichen Schlitten (30) montiert sind.

7. Leitungskupplungsvorrichtung nach Anspruch 6, dadurch gekennzeichnet, daß der Schlitten (30) in einer Schlittenführung mittels eines insbesondere fernsteuerbaren Motors (38) beweglich ist.

8. Leitungskupplungsvorrichtung nach Anspruch 6 oder 7, dadurch gekennzeichnet, daß die Druckmittelzufuhr zu dem Stecker (18) oder der Muffe (20) mittels eines Ventils (40) unterbrochen werden kann und zwischen dem Schlitten (30) und dem Ventil (40) eine mittelbare oder unmittelbare Verbindung zum Öffnen und Schließen des Ventils (40) besteht.

9. Leitungskupplungsvorrichtung nach einem oder mehreren der vorherigen Ansprüche, dadurch gekennzeichnet, daß die Träger (12, 14) jeweils zusammenpassende Zentriermittel (46) und Stecker und Muffe(n) zur elektrischen Energieübertragung aufweisen.

10. Verwendung einer Leitungskupplungsvorrichtung nach einem oder mehreren der vorherigen Ansprüche für den Anschluß einer Erntebergungsvorrichtung an eine Erntemaschine, insbesondere eines Schneidwerks an einen Mähdrescher.
